# EUROPÄISCHE PATENTSCHRIFT

(11) **EP 4 118 734 B1**
(45) Veröffentlichungstag und Bekanntmachung des Hinweises auf die Patenterteilung: **16.09.2026**
(21) Anmeldenummer: 21710230.0
(22) Anmeldetag: 03.03.2021
(51) Int. Cl.: H02K 5/15, H02K 5/04

(54) **ANTRIEBSEINRICHTUNG FÜR EIN AKTUATOR**
DRIVE DEVICE FOR AN ACTUATOR
DISPOSITIF D'ENTRAÎNEMENT DESTINÉ À UN ACTIONNEUR

(30) Priorität: 13.03.2020 DE 102020203279
(43) Veröffentlichungstag der Anmeldung: 18.01.2023
(73) Patentinhaber: Robert Bosch GmbH, 70442 Stuttgart (DE)
(72) Erfinder: HABERKORN, Konstantin, 70437 Stuttgart (DE); FIX, Vincent, 67850 Herrlisheim (FR); KRUEGER, Andreas, 77815 Buehl (DE); HAUFE, Benjamin, 74076 Heilbronn (DE)
(86) Internationale Anmeldenummer: PCT/EP2021/055310
(87) Internationale Veröffentlichungsnummer: WO 2021/180538

(56) Entgegenhaltungen:
- DE-A1- 102007 025 838
- DE-A1- 102009 001 948
- US-A1- 2012 019 080

## Beschreibung

Die Erfindung betrifft eine Antriebseinrichtung für einen Aktuator, insbesondere für eine Bremseinrichtung, mit einer elektrischen Maschine, die einen in einem Gehäuse drehbar gelagerten Rotor und einen gehäusefesten Stator aufweist, mit einem in dem Gehäuse angeordneten Lagerschild, der zumindest einen sich radial erstreckenden hülsenförmigen Lagerabschnitt zur drehbaren Lagerung einer den Rotor tragenden Antriebswelle der elektrischen Maschine aufweist, wobei der Lagerschild einen sich axial erstreckenden und hülsenförmig ausgebildeten Halteabschnitt aufweist, der reibschlüssig in einem hülsenförmig ausgebildeten Endabschnitt des Gehäuses gehalten ist und einen Durchmesser aufweist, der größer ist als der Durchmesser des Lagerabschnitts, wobei zwischen dem Halteabschnitt und dem Lagerabschnitt zumindest ein sich radial erstreckender und scheibenringförmig ausgebildeter Bodenabschnitt des Lagerschilds ausgebildet ist.

### Stand der Technik

Antriebseinrichtungen der eingangs genannten Art sind aus dem Stand der Technik bekannt. Um die Antriebswelle eines Rotors einer elektrischen Maschine in einem Gehäuse zu lagern, ist es bekannt, in dem Gehäuse einen oder mehrere Lagerschilder anzuordnen, die separat zu dem Gehäuse ausgebildet und in dem Gehäuse befestigt sind. Dadurch ist eine einfache Montage der elektrischen Maschine gewährleistet. Beispielsweise ist das Gehäuse der elektrischen Maschine dabei becherförmig ausgebildet und wird an seiner offenen Seite durch einen Lagerschild verschlossen, der zumindest einen Lagerabschnitt aufweist, in welchem die Antriebswelle drehbar gelagert ist. Dabei ist üblicherweise in dem Lagerabschnitt ein Drehlager, beispielsweise ein Wälzkörperlager, Magnetlager oder dergleichen, angeordnet, das zwischen der Antriebswelle und dem Lagerschild wirkt. Das Wälzkörperlager ist dabei axial und radial an dem oder durch den Lagerschild ausgerichtet und gehalten. Bekannte Lagerschilder weisen dazu einen hülsenförmigen Lagerabschnitt auf, in welchem das Wälzkörperlager beispielsweise axial eingeschoben werden kann. Derartige Lagerschilder weisen außerdem einen weiteren hülsenförmigen Abschnitt auf, der als Halteabschnitt den Lagerschild in dem Gehäuse ausrichtet, orientiert und gegebenenfalls auch hält. Dabei ist es insbesondere bekannt, den Halteabschnitt durch eine Presspassung in dem Gehäuse, insbesondere in einem hülsenförmigen Endabschnitt des Gehäuses zu halten. Die Presspassung kann dabei durch ein Einpressen des Lagerschilds in das Gehäuse oder durch ein Aufschrumpfen des Gehäuses auf dem Lagerschild erfolgen.

Derartige Antriebseinrichtungen sind beispielsweise in den Offenlegungsschriften US 2012/019080 A1, DE 10 2009 001 948 A1 und DE 10 2007 025 838 A1 offenbart.

### Offenbarung der Erfindung

Die erfindungsgemäße Antriebseinrichtung mit den Merkmalen des Anspruchs 1 hat den Vorteil, dass der Lagerschild durch das Einpressen in das Gehäuse oder durch das Aufschrumpfen des Gehäuses auf den Lagerschild nicht in seiner Ausrichtung beeinträchtigt wird. Durch eine vorteilhafte Gestaltung des Halteabschnitts des Lagerschilds wird erreicht, dass die Ausrichtung insbesondere des zwischen dem Lagerschild und dem Halteabschnitt liegenden ringscheibenförmigen Bodenabschnitt des Lagerschilds innerhalb enger Toleranzgrenzen verbleibt, sodass Fehlstellungen insbesondere des Wälzkörperlagers sicher vermieden werden. Erfindungsgemäß wird dies dadurch erreicht, dass der Halteabschnitt einen sich an den Bodenabschnitt anschließenden ersten axialen Teilabschnitt mit einem ersten Außendurchmesser und einen sich an den ersten Teilabschnitt anschließenden zweiten Teilabschnitt mit einem zweiten Außendurchmesser aufweist, wobei der zweite Außendurchmesser größer ist als der erste Außendurchmesser. Dadurch wird erreicht, dass der von dem Bodenabschnitt entfernter liegende Teilabschnitt des Lagerschilds einen größeren Außendurchmesser aufweist und dass damit auch die Lagerstelle des Lagerschilds an dem Endabschnitt des Gehäuses der elektrischen Maschine von dem Bodenabschnitt des Lagerschilds zumindest um den ersten Teilabschnitt beabstandet liegt. Dadurch wird erreicht, dass die auftretenden radialen Presskräfte beabstandet zu dem Bodenabschnitt in den Lagerschild eingebracht werden, wodurch diese in einem Bereich wirken, der für die Ausrichtung, insbesondere des Bodenabschnitts und des Lagerabschnitts bezüglich der Antriebswelle der elektrischen Maschine einen geringeren Einfluss hat. Durch die vorteilhafte Durchmesserwahl ist gewährleistet, dass bei dem Pressvorgang beziehungsweise bei Montage der Antriebseinrichtung insbesondere ein Verschwenken des Bodenabschnitts aus einer senkrechten Ebene zur Drehachse der Antriebswelle heraus sicher verhindert wird.

Vorzugsweise ist der Endabschnitt des Gehäuses axial mindestens so lange wie der Halteabschnitt des Lagerschilds, sodass der Lagerschild vollständig in den Endabschnitt des Gehäuses eingeführt und dort arretiert beziehungswese befestigt werden kann.

Weiterhin ist bevorzugt vorgesehen, dass der Endabschnitt des Gehäuses einen durchgehend konstanten Innendurchmesser aufweist. Dadurch ist gewährleistet, dass das Gehäuse in dem Endabschnitt nur mit dem zweiten Teilabschnitt des Halteabschnitts des Lagerschilds zusammenwirkt und somit keine Kräfte radial auf den Lagerschild in der Nähe des Bodenabschnitts auf den Lagerschild übertragen werden.

Vorzugsweise weist der Halteabschnitt des Lagerschilds eine durchgehend konstante oder nahezu konstante Radialerstreckung auf. Das bedeutet, dass der Lagerschild in dem Halteabschnitt eine konstante Dicke aufweist und somit insbesondere einfach als Tiefziehteil herstellbar ist. Darüber hinaus bedeutet dies, dass mit dem Außendurchmesser auch der Innendurchmesser von dem ersten Teilabschnitt in den zweiten Teilabschnitt zunimmt.

Erfindungsgemäß erstreckt sich der zweite Teilabschnitt bis zu einer freien Stirnseite des Lagerschilds. Damit ist der Halteabschnitt insgesamt nur durch den ersten und den zweiten Teilabschnitt gebildet, wobei der zweite Teilabschnitt, der zur Anlage an dem Endabschnitt des Gehäuses dient, den Endabschnitt des Lagerschilds bildet. Dadurch ist eine sichere und gewünschte Anlage des Lagerschilds an der Innenseite des Endabschnitts des Gehäuses sicher gewährleistet.

Vorzugsweise liegt die freie Stirnseite des Lagerschilds axial auf Höhe eines freien Endes des Endabschnitts des Gehäuses. Damit fluchten das Ende des Lagerschilds und das Ende des Gehäuses miteinander, wodurch die axiale Baulänge der Antriebseinrichtung insgesamt auf die Axialerstreckung des Gehäuses zumindest im Wesentlichen beschränkt ist.

Erfindungsgemäß ist an dem freien Ende des Endabschnitts des Gehäuses ein radial nach außen vorstehender Anbauflansch in der Art eines Kragens zur Befestigung des Gehäuses an dem Aktuator angeordnet. Der Anbauflansch ist somit an dem Gehäuse ausgebildet und fluchtet zumindest im Wesentlichen mit dem Ende des Lagerschilds. Die Kontaktfläche zwischen Lagerschild und Gehäuse ist damit maximiert. Darüber hinaus ist eine einfache Montage der Antriebseinrichtung an einem Verbraucher, insbesondere an dem zuvor genannten Aktuator, mittels des Anbauflanschs gewährleistet.

Weiterhin ist bevorzugt vorgesehen, dass der Anbauflansch einstückig mit dem Gehäuse ausgebildet ist, insbesondere als Kragen. Dadurch ist eine kostengünstige Herstellung der Antriebseinrichtung und insbesondere des Gehäuses gewährleistet.

Erfindungsgemäß schließt die Stirnseite des Lagerschilds bündig mit einer dem Aktuator zugeordneten Stirnfläche des Anbauflansches ab. Dadurch können sowohl Lagerschild als auch Anbauflansch auf dem Aktuator, beispielsweise auf einem Gehäuse des Aktuators, aufliegen, wodurch eine vorteilhafte Dichtung erzielt werden kann.

Besonders bevorzugt ist ein Dichtelement vorhanden, insbesondere ein Silikondichtelement, das sich über die Stirnseite des Lagerschilds und die Stirnfläche des Anbauflanschs jeweils zumindest bereichsweise erstreckt, sodass das Dichtelement sowohl auf dem Lagerschild als auch auf dem Gehäuse beziehungsweise dem Anbauflansch des Gehäuses aufliegt. Damit erstreckt sich das Dichtelement über Lagerschild und Anbauflansch, sodass eine besonders dichte Verbindung zum einen zwischen Lagerschild und Gehäuse und zum anderen zwischen der Antriebseinrichtung und dem Aktuator, an welchem die Antriebseinrichtung anzubringen ist oder angebracht ist, erzielt.

Im Folgenden soll die Erfindung anhand der Zeichnungen näher erläutert werden. Dazu zeigen
- Figur 1: eine vorteilhafte Antriebseinrichtung in einer vereinfachten Längsschnittdarstellung und

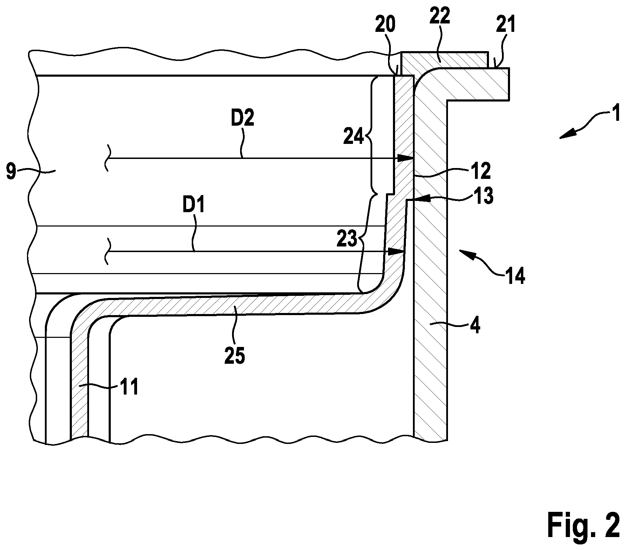

- Figur 2: eine vergrößerte Detailansicht der Antriebseinrichtung.

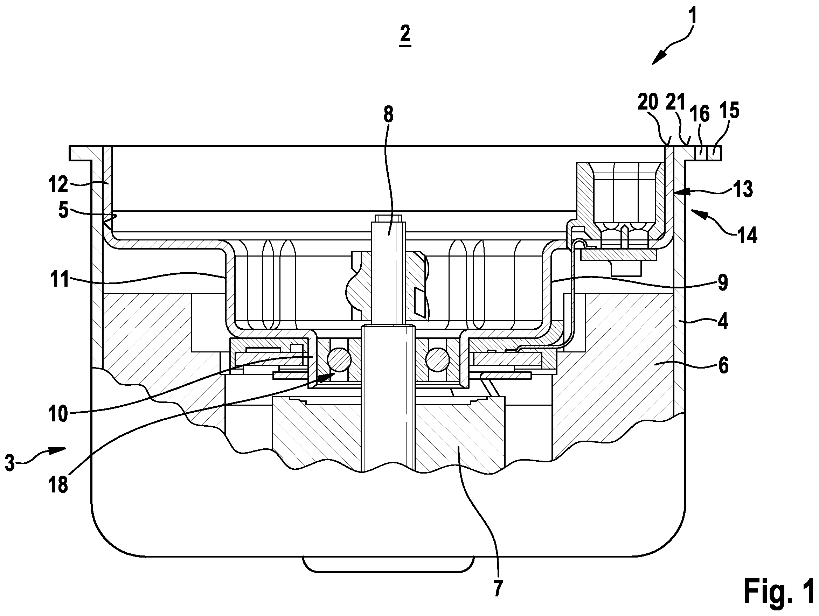

Figur 1 zeigt in einer vereinfachten Längsschnittdarstellung eine vorteilhafte Antriebseinrichtung 1 für einen hier nicht dargestellten Aktuator 2 oder Verbraucher, der durch die Antriebseinrichtung betreibbar ist. Die Antriebseinrichtung 1 weist dazu eine elektrische Maschine 3 auf, die in einem Gehäuse 4 angeordnet ist. Das Gehäuse 4 ist im Wesentlichen becherförmig ausgebildet und weist an einer Stirnseite eine Aufnahmeöffnung 5 auf. Die elektrische Maschine 3 weist einen gehäusefest in dem Gehäuse 4 angeordneten Stator 6 sowie einen dem Stator 6 zugeordneten Rotor 7 auf. Der Rotor 7 ist auf einer Antriebswelle 8 angeordnet, die drehbar in dem Gehäuse 4 gelagert ist. Insbesondere ist die Antriebswelle 8 durch zwei oder mehr Wälzkörperlager 18 drehbar gelagert. Eines der Wälzkörperlager 18, das in der Figur gezeigt ist, ist dabei an einem Lagerschild 9 angeordnet, der sich zu großen Teilen innerhalb des Gehäuses 4 befindet. Während gemäß dem vorliegenden Ausführungsbeispiel ein Wälzkörperlager 18 gezeigt und beschrieben ist, kann gemäß einem weiteren Ausführungsbeispiel die Lagerung der Antriebswelle 8 in dem Lagerschild 9 alternativ durch eine andere Art von Drehlager, wie beispielsweise Magnetlager, Hydrauliklager, Pneumatiklager oder Reiblager, vorgesehen sein.

Der Lagerschild 9 ist aus Metall als Tiefziehteil gefertigt und weist einen hülsenförmigen ersten Abschnitt 10 auf, der als Lagerabschnitt zur Aufnahme und Anordnung des oben genannten Wälzkörperlagers 18 dient, einen zweiten Abschnitt 11 und einen dritten Abschnitt 12, wobei sich die Abschnitte 10 bis 12 dadurch unterscheiden, dass der Abschnitt 10 einen ersten Durchmesser D1 aufweist, der kleiner ist als ein Durchmesser D2 des zweiten Abschnitts 11, und wobei der dritte Abschnitt 12 einen Durchmesser D3 aufweist, der größer ist als der Durchmesser D2. Die Abschnitte folgen in der genannten Reihenfolge 10, 11, 12 axial aufeinander. Der zweite Abschnitt 11 dient insbesondere zur Aufnahme eines hier nicht gezeigten Getriebes, insbesondere Planetenradgetriebe, das zur Übersetzung von Drehzahl und/oder Drehmoment zu dem Verbraucher 2 dient.

Der dritte Abschnitt 12 bildet einen Halteabschnitt 13, durch welchen der Lagerschild 9 in dem Gehäuse 4 der elektrischen Maschine 3 gehalten ist.

Das Gehäuse 4 weist einen Endabschnitt 14 auf, welcher die Öffnung 5 ausbildet. Der Endabschnitt 14 und damit auch die Öffnung 5 weisen einen Innendurchmesser auf, der geringfügig kleiner ist als ein Außendurchmesser des Halteabschnitts 12 des Lagerschilds 9, sodass zwischen dem Lagerschild 9 und dem Gehäuse 4 im Bereich vom Halteabschnitt 13 und Endabschnitt 14 eine radiale Presspassung vorliegt, durch welche der Lagerschild 9 in dem Gehäuse 4 befestigt ist. Der Endabschnitt 14 weist dabei eine axiale Länge auf, die mindestens so lang ist, wie die axiale Länge des Abschnitts 12 beziehungsweise des Halteabschnitts 13 des Lagerschilds 9, sodass dieser bereichsweise oder vollständig in dem Gehäuse 4 anordenbar ist.

Das Gehäuse 4 weist an dem freien Ende des Endabschnitts 14 außerdem einen radial nach außen vorstehenden Kragen in Form eines Anbauflansches 15 auf. Der Anbauflansch 15 steht radial von dem Gehäuse 4 vor und bildet den Anbauflansch 15 der Antriebseinrichtung 1. Dazu weist der Anbauflansch 15 beispielsweise über dessen Umfang gleichmäßig verteilt angeordnete Öffnungen 16 auf, von denen in der Figur nur eine gezeigt ist, durch welche Befestigungsschrauben zur Montage der Antriebseinrichtung 1 an dem Verbraucher 2 genutzt werden können. Die Antriebseinrichtung 1 ist somit insgesamt durch den Anbauflansch 15 des Lagerschilds 9 an dem Verbraucher 2 anordenbar beziehungsweise befestigbar.

Wie in Figur 1 zu erkennen ist, endet der Lagerschild mit dem Halteabschnitt 13 bündig zu dem Anbauflansch 15 des Gehäuses 4, sodass eine freie Stirnseite 20 des Halteabschnitts 13 bündig zu einer Stirnfläche 21 des Gehäuses 4 an dem Anbauflansch 15 liegt. Optional ist ein Dichtelement, insbesondere ein Silikondichtelement 22 vorhanden, das auf der Stirnseite der Antriebseinrichtung 1 derart aufliegt, dass es sich sowohl zumindest bereichsweise über die Stirnseite 20 als auch über die Stirnfläche 21 erstreckt, sodass eine besonders dichte Verbindung zwischen Lagerschild 9 und Gehäuse 4 gewährleistet ist und darüber hinaus auch eine dichte Verbindung zwischen der Antriebseinrichtung 1 einerseits und dem Verbraucher 2, an welchem der Anbauflansch 15 anzuordnen ist, andererseits.

Der Halteabschnitt 13 des Lagerschilds 9 weist einen ersten Teilabschnitt 23 und einen zweiten Teilabschnitt 24 auf, die sich axial von einem zwischen dem Abschnitt 11 und dem Halteabschnitt 13 im Wesentlichen radial erstreckenden ringscheibenförmigen Bodenabschnitt 25 hintereinander erstrecken. Dabei geht der erste Teilabschnitt 23 von dem Bodenabschnitt 25 aus, stehen also im Wesentlichen senkrecht beziehungsweise axial von diesem vor und der Teilabschnitt 24 schließt sich an den Teilabschnitt 23 an und endet in der Stirnseite 20.

Die beiden Teilabschnitte 23, 24 unterscheiden sich dadurch, dass der Außendurchmesser des Teilabschnitts 24 größer ist als der Außendurchmesser des Teilabschnitts 23, sodass die Presspassung zwischen Gehäuse 4 und Lagerschild 9 nur im Bereich des zweiten Teilabschnitts 24 vorliegt. Dadurch liegt die Kontaktstelle zwischen Gehäuse 4 und Lagerschild 9 beabstandet zu dem Bodenabschnitt 25. Dadurch werden im Bereich des Teilabschnitts 23 vorzugsweise keine oder nur geringe Radialkräfte auf den Lagerschild 9 übertragen, die sich auch auf den Bodenabschnitt 25 auswirken könnten. Durch die vorteilhafte Ausbildung der Antriebseinrichtung 1 wird dabei erreicht, dass durch das Ein- oder Aufschrumpfen des Gehäuses 4 auf den Lagerschild 9 im Bereich des Teilabschnitts 24 keine Kräfte derart auf den Lagerschild 9 einwirken, dass der Bodenabschnitt 25 in seiner Ausrichtung in einer Ebene senkrecht zur Rotationsachse der Antriebswelle 8 herausbewegt wird. Dadurch wird mit einfachen Mitteln gewährleistet, dass eine Schiefstellung, insbesondere des Lagerabschnitts (Abschnitt 10), verhindert ist. Des Weiteren ergibt sich eine vereinfachte Geometrie des Gehäuses 4 mit einem zumindest im Endabschnitt 14 gleichbleibenden beziehungsweise konstanten Innendurchmesser. Ist das Gehäuse 4 als Tiefziehteil ausgebildet, kommt das Tiefziehwerkzeug somit mit weniger Ziehstufen aus, wodurch eine vereinfachte Herstellung erreicht wird. Durch die insgesamt große axiale Länge des Halteabschnitts 13 wird dabei außerdem erreicht, dass eine große radiale Dichtfläche zwischen Lagerschild 9 und Gehäuse 4 entsteht.

## Patentansprüche

1. Antriebseinrichtung (1) für einen Aktuator (2), insbesondere für eine Bremseinrichtung eines Kraftfahrzeugs, mit einer elektrischen Maschine (3), die einen in einem Gehäuse (4) drehbar gelagerten Rotor (7) und einen gehäusefesten Stator (6) aufweist, mit einem in dem Gehäuse (4) angeordneten Lagerschild (9), der zumindest einen sich axial erstreckenden hülsenförmigen Lagerabschnitt (10) zur drehbaren Lagerung einer den Rotor (7) tragenden Antriebswelle (8) der elektrischen Maschine (3) aufweist, wobei der Lagerschild (9) einen sich axial erstreckenden und hülsenförmig ausgebildeten Halteabschnitt (13) aufweist, der reibschlüssig in einem hülsenförmig ausgebildeten Endabschnitt (14) des Gehäuses (4) gehalten ist und einen Durchmesser aufweist, der größer ist als der Durchmesser des Lagerabschnitts (10), wobei zwischen dem Halteabschnitt (13) und dem Lagerabschnitt (10) zumindest ein sich radial erstreckender und scheibenringförmig ausgebildeter Bodenabschnitt (25) des Lagerschilds (9) ausgebildet ist, wobei der Halteabschnitt (13) einen sich an den Bodenabschnitt (25) anschließenden ersten axialen Teilabschnitt (23) mit einem ersten Außendurchmesser (D1) und einen sich an den ersten Teilabschnitt (23) anschließenden zweiten Teilabschnitt (24) mit einem zweiten Außendurchmesser (D2) aufweist, wobei der zweite Außendurchmesser (D2) größer ist als der erste Außendurchmesser (D1), wobei sich der zweite Teilabschnitt (24) bis zu einer freien Stirnseite (20) des Lagerschilds (9) erstreckt, **dadurch gekennzeichnet, dass** an dem freien Ende des Endabschnitts (14) des Gehäuses (4) ein radial nach außen vorstehender Anbauflansch (15) zur Befestigung des Gehäuses (4) an dem Aktuator (2) angeordnet ist, und dass die Stirnseite (20) des Lagerschilds (9) bündig mit einer dem Aktuator (2) zugeordneten Stirnfläche (21) des Anbauflanschs (15) abschließt.

2. Antriebseinrichtung nach Anspruch 1, **dadurch gekennzeichnet, dass** der Endabschnitt (14) des Gehäuses (4) axial mindestens so lange ist wie der Haltabschnitt (13) des Lagerschilds (9).

3. Antriebseinrichtung nach einem der vorhergehenden Ansprüche, **dadurch gekennzeichnet, dass** der Endabschnitt (14) des Gehäuses (4) einen durchgehend konstanten Innendurchmesser aufweist.

4. Antriebseinrichtung nach einem der vorhergehenden Ansprüche, **dadurch gekennzeichnet, dass** der Halteabschnitt (13) des Lagerschilds (9) eine durchgehend konstante oder nahezu konstante Radialerstreckung aufweist.

5. Antriebseinrichtung nach einem der vorhergehenden Ansprüche, **dadurch gekennzeichnet, dass** die freie Stirnseite (20) des Lagerschilds (9) axial auf Höhe eines freien Endes des Endabschnitts (14) des Gehäuses (4) liegt.

6. Antriebseinrichtung nach einem der vorhergehenden Ansprüche, **dadurch gekennzeichnet, dass** der Anbauflansch (15) als einstückig mit dem Gehäuse (4) ausgebildeter Kragen ausgebildet ist.

7. Antriebseinrichtung nach einem der vorhergehenden Ansprüche, **dadurch gekennzeichnet, dass** sich ein Dichtelement (22), insbesondere ein Silikondichtelement (22), über die Stirnseite (20) des Lagerschilds (9) und die Stirnfläche (21) des Anbauflansches (15) jeweils zumindest bereichsweise erstreckt.

## Claims

1. Drive device (1) for an actuator (2), in particular for a braking device of a motor vehicle, comprising an electric machine (3) which has a rotor (7) rotatably mounted in a housing (4) and a stator (6) fixed to the housing, and comprising an end plate (9) which is arranged in the housing (4) and has at least one axially extending sleeve-like bearing portion (10) for rotatably mounting a drive shaft (8) of the electric machine (3) bearing the rotor (7), wherein the end plate (9) has an axially extending and sleeve-like holding portion (13) which is frictionally held in a sleeve-like end portion (14) of the housing (4) and has a diameter which is greater than the diameter of the bearing portion (10), wherein at least one radially extending and annular disc-like bottom portion (25) of the end plate (9) is formed between the holding portion (13) and the bearing portion (10), wherein the holding portion (13) has a first axial partial portion (23) adjoining the bottom portion (25) and having a first outside diameter (D1) and a second partial portion (24) adjoining the first partial portion (23) and having a second outside diameter (D2), wherein the second outside diameter (D2) is greater than the first outside diameter (D1), wherein the second partial portion (24) extends up to a free end side (20) of the end plate (9), **characterized in that** a radially outwardly projecting mounting flange (15) for fastening the housing (4) to the actuator (2) is arranged at the free end of the end portion (14) of the housing (4), and **in that** the end side (20) of the end plate (9) terminates flush with an end face (21) of the mounting flange (15) associated with the actuator (2).

2. Drive device according to Claim 1, **characterized in that** the end portion (14) of the housing (4) is axially at least as long as the holding portion (13) of the end plate (9).

3. Drive device according to either of the preceding claims, **characterized in that** the end portion (14) of the housing (4) has a continuously constant inside diameter.

4. Drive device according to any of the preceding claims, **characterized in that** the holding portion (13) of the end plate (9) has a continuously constant or virtually constant radial extent.

5. Drive device according to any of the preceding claims, **characterized in that** the free end side (20) of the end plate (9) is axially level with a free end of the end portion (14) of the housing (4).

6. Drive device according to any of the preceding claims, **characterized in that** the mounting flange (15) is formed as a collar formed in one piece with the housing (4).

7. Drive device according to any of the preceding claims, **characterized in that** a sealing element (22), in particular a silicone sealing element (22), extends over the end side (20) of the end plate (9) and the end face (21) of the mounting flange (15) at least in regions in each case.

## Revendications

1. Dispositif d'entraînement (1) pour un actionneur (2), en particulier pour un dispositif de freinage d'un véhicule automobile, comprenant une machine électrique (3) qui présente un rotor (7) monté rotatif dans un carter (4) et un stator (6) solidaire du carter, un flasque (9) disposé dans le carter (4), qui présente au moins une section de palier (10) en forme de douille, s'étendant axialement, pour le montage rotatif d'un arbre d'entraînement (8) supportant le rotor (7) de la machine électrique (3), dans lequel le flasque (9) présente une section de maintien (13) réalisée en forme de douille et s'étendant axialement, qui est maintenue par friction dans une section d'extrémité (14) du carter (4), réalisée en forme de douille, et présente un diamètre qui est supérieur au diamètre de la section de palier (10), dans lequel entre la section de maintien (13) et la section de palier (10) est réalisée au moins une section de fond (25) du flasque (9), réalisée en forme d'anneau plat et s'étendant radialement, dans lequel la section de maintien (13) présente une première section partielle axiale (23) consécutive à la section de fond (25), d'un premier diamètre extérieur (D1), et une deuxième section partielle (24) consécutive à la première section partielle (23), d'un deuxième diamètre extérieur (D2), dans lequel le deuxième diamètre extérieur (D2) est supérieur au premier diamètre extérieur (D1), la deuxième section partielle (24) s'étendant jusqu'à une face frontale libre (20) du flasque (9), **caractérisé en ce qu'**un flasque rapporté (15) faisant saillie radialement vers l'extérieur pour fixer le carter (4) à l'actionneur (2) est disposé à l'extrémité libre de la section d'extrémité (14) du carter (4), et **en ce que** la face frontale (20) du flasque (9) se termine en affleurement avec une face frontale (21) du flasque rapporté (15) associée à l'actionneur (2).

2. Dispositif d'entraînement selon la revendication 1, **caractérisé en ce que** la section d'extrémité (14) du carter (4) est axialement au moins aussi longue que la section de maintien (13) du flasque (9).

3. Dispositif d'entraînement selon l'une quelconque des revendications précédentes, **caractérisé en ce que** la section d'extrémité (14) du carter (4) présente un diamètre intérieur constant en continu.

4. Dispositif d'entraînement selon l'une quelconque des revendications précédentes, **caractérisé en ce que** la section de maintien (13) du flasque (9) présente une extension radiale constante ou presque constante en continu.

5. Dispositif d'entraînement selon l'une quelconque des revendications précédentes, **caractérisé en ce que** la face frontale libre (20) du flasque (9) repose axialement à la hauteur d'une extrémité libre de la section d'extrémité (14) du carter (4).

6. Dispositif d'entraînement selon l'une quelconque des revendications précédentes, **caractérisé en ce que** le flasque rapporté (15) est réalisé comme une collerette réalisée d'un seul tenant avec le carter (4).

7. Dispositif d'entraînement selon l'une quelconque des revendications précédentes, **caractérisé en ce qu'**un élément d'étanchéité (22), en particulier un élément d'étanchéité en silicone (22), s'étend respectivement au moins par endroits sur la face frontale (20) du flasque (9) et la face frontale (21) du flasque rapporté (15).
